# EUROPEAN PATENT APPLICATION

(11) **EP 1 956 134 A1**
(43) Date of publication of application: **13.08.2008**
(21) Application number: 05811756.5
(22) Date of filing: 01.12.2005
(51) Int. Cl.: D06M 11/53, B09B 3/00

(54) **SOLIDIFYING AGENT FOR FIBROUS TREATMENT OBJECT AND METHOD OF FIXING TREATMENT THEREFOR**

(71) Applicant: Kankyo Anetos Co., Ltd, Saga-shi, Saga 840-0027 (JP); Shono, Akifumi, Saga-shi, Saga 8400027 (JP); SHONO, Michiyuki, Setagaya-ku, Tokyo 1580091 (JP); SAKASHITA, Masashi, Kisarazu-shi, Chiba 2920822 (JP); Sagashiki Printing Co., Ltd., Saga-shi Saga 849-0921 (JP); Noutomi, Keiichi, Maebaru-shi, Fukuoka 819-1111 (JP)
(72) Inventor: NOUTOMI, Keiichi, Maebaru-shi Fukuoka 8191111 (JP)
(74) Representative: Pätzold, Herbert
(86) International application number: PCT/JP2005/022117
(87) International publication number: WO 2007/063599

(57) **Abstract**

An object of the invention is to provide a solidifying agent for fibrous treatment objects to be treated or a method of fixing treatment for fibrous treatment objects to be treated. According to the present invention, the solidifying agent for the fibrous treatment objects to be treated mainly contains an aqueous sulfide solution, in which one or a mixture of Group 1 or Group 2 metals or other alkali metal substances is ionically bonded with sulfur. Further, according to the present invention, the solidifying agent for the fibrous treatment objects to be treated mainly contains an aqueous solution of polysulfide of one or a mixture of Group 1 or Group 2 metals or other alkali metal substances.

## Description

### TECHNICAL FIELD OF THE INVENTION

The present invention relates to a solidifying agent for fibrous treatment objects to be treated and a method of fixing treatment for fibrous treatment objects to be treated. BACKGROUND TECHNOLOGY

Fibrous asbestos and metals have been used as building materials. Especially, due to superior characteristics such as durability, heat resistance, chemical resistance, and electrical insulation, and also low cost, asbestos have been widely used for various applications.

When fibrous substances used in building materials scatter and are inhaled in a human body, the fibrous substances may be harmful to the human body. Accordingly, measures have been taken to prohibit use thereof.

However, the fibrous substances have been already heavily used in building materials. Therefore, in addition to the prohibition of future use thereof, it is necessary to prevent the existing fibrous substances from scattering, and to provide a technology for hardening the existing fibrous substances.

The technology of hardening the fibrous substances is necessary not only for continuous use of the existing fibers, but also for preventing the fibrous substances from scattering when the existing fibrous substances are removed.

### DISCLOSURE OF THE INVENTION

In view of the problems described above, according to a first aspect of the present invention, a solidifying agent for fibrous treatment objects to be treated contains an aqueous sulfide solution, in which one or a mixture of Group 1 or Group 2 metals or other alkali metal substances is ionically bonded with sulfur.

According to a second aspect of the present invention, a solidifying agent for fibrous treatment objects to be treated contains an aqueous solution of polysulfide of one or a mixture of Group 1 or Group 2 metals or other alkali metal substances.

According to a third aspect of the present invention, the solidifying agent for fibrous treatment objects to be treated in the first or second aspect contains an aqueous solution of metal hydroxide or an aqueous solution containing fine particles of metal hydroxide.

According to a fourth aspect of the present invention, a method of fixing treatment for fibrous treatment objects to be treated includes a step of coating the fibrous treatment objects with the solidifying agent in the first or second aspect, or soaking the solidifying agent in the first or second aspect in the fibrous treatment objects, so that the fibrous treatment objects to be treated are hardened.

According to a fifth aspect of the present invention, in the method of fixing treatment for the fibrous treatment objects to be treated in the fourth aspect, after adding a surfactant to the solidifying agent in the first or second aspect, the solidifying agent in the first or second aspect coats or soaks in the fibrous treatment objects to be treated.

According to a sixth aspect of the present invention, in the method of fixing treatment for the fibrous treatment objects to be treated in the fourth or fifth aspect, after adding water to the solidifying agent in the first or second aspect to adjust a specific gravity thereof, the solidifying agent in the first or second aspect coats or soaks in the fibrous treatment objects to be treated.

According to a seventh aspect of the present invention, in the method of fixing treatment for the fibrous treatment objects to be treated in one of the fourth to sixth aspects, after or while adding an aqueous solution of metal hydroxide or an aqueous solution containing metal hydroxide fine particles to the solidifying agent in the first or second aspect, the solidifying agent in the first or second aspect coats or soaks in the fibrous treatment objects to be treated.

According to an eighth aspect of the present invention, in the method of fixing treatment for the fibrous treatment objects to be treated in one of the fourth to seventh aspects, after or while adding a sizing agent to the solidifying agent in the first or second aspect, the solidifying agent in the first or second aspect coats or soaks in the fibrous treatment objects to be treated.

According to a ninth aspect of the present invention, in the method of fixing treatment for the fibrous treatment objects to be treated in one of the fourth to eighth aspects, after the solidifying agent in the first or second aspect coats or soaks in the fibrous treatment objects to be treated, the sulfur is dried naturally or forcibly to crystallize, thereby hardening the fibrous treatment objects.

According to a tenth aspect of the present invention, in the method of fixing treatment for the fibrous treatment objects to be treated in one of the fourth to ninth aspects, the solidifying agent in the first or second aspect coats or soaks in the fibrous treatment objects to be treated, so that the solidifying agent reaches a surface of a metal structure to which the fibrous treatment objects are adhered.

### PREFERRED EMBODIMENTS OF THE INVENTION

According to the present invention, a solidifying agent for fibrous treatment objects to be treated mainly contains an aqueous sulfide solution, in which one or a mixture of Group1 or Group 2 metals or other alkali metal substances is ionically bonded with sulfur.

Further, the solidifying agent for fibrous treatment objects to be treated may contain an aqueous solution of polysulfide of one or a mixture of Group 1 or Group 2 metals or other alkali metal substances.

Further, the solidifying agent for fibrous treatment objects to be treated may contain an aqueous solution of metal hydroxide or an aqueous solution containing fine particles of metal hydroxide.

Here, the fibrous treatment objects to be treated include natural mineral fibers, which are represented by asbestos, or metal fibers.

The Group 1 metal includes one of lithium (Li), sodium (Na), potassium (K), rubidium (Rb), cesium (Cs), and francium (Fr). The Group 2 metal includes one of beryllium (Be), magnesium (Mg), calcium (Ca), strontium (Sr), barium (Ba), and radium (Ra). The other alkali metal substance includes a single substance or a substance that can form alkali metal by addition of water or by heating, such as slaked lime and quicklime and a mixture of them. The aqueous sulfide solution includes an aqueous solution of lithium sulfide (Li₂S), sodium sulfide (Na₂S), potassium sulfide (K₂S), rubidium sulfide (Rb₂S), cesium sulfide (Cs₂S), francium sulfide (Fr₂S), beryllium sulfide (BeS), magnesium sulfide (MgS), calcium sulfide (CaS), strontium sulfide (SrS), barium sulfide (BaS), and radium sulfide (RaS). The aqueous solution of polysulfide includes an aqueous solution of lithium sulfide (Li₂Sₓ), sodium sulfide (Na₂Sₓ), potassium sulfide (K₂Sₓ), rubidium sulfide (Rb₂Sₓ), cesium sulfide (Cs₂Sₓ), francium sulfide (Fr₂Sₓ), beryllium sulfide (BeSₓ), magnesium sulfide (MgSₓ), calcium sulfide (CaSₓ), strontium sulfide (SrSₓ), barium sulfide (BaSₓ), and radium sulfide (RaSₓ), where x = 6 to 12. The metal hydroxide includes lithium hydroxide (Li₂OH), sodium hydroxide (Na₂OH), potassium hydroxide (K₂OH), rubidium hydroxide (Rb₂OH), cesium hydroxide (Cs₂OH), francium hydroxide (Fr₂OH), beryllium hydroxide (BeOH), magnesium hydroxide (MgOH), calcium hydroxide (CaOH), strontium hydroxide (SrOH), barium hydroxide (BaOH), and radium hydroxide (RaOH).

The aqueous sulfide solution, in which one or a mixture of the Group 1 or Group 2 metals or other alkali metal substances is ionically bonded with sulfur; the aqueous solution of polysulfide of one or a mixture of the Group 1 or Group 2 metals or other alkali metal substances; and the aqueous solution of metal hydroxide or the aqueous solution containing fine particles of metal hydroxide can be prepared by well-known chemical reactions.

As a method of stably and safely producing polysulfide (Sx, where x = 6 to 12), there is a method of producing by reacting one or a mixture of potassium hydroxide, magnesium hydroxide, calcium hydroxide, and sodium hydroxide with sulfur in an airtight container under high pressure at 98 to 345°C without exhausting steam, while mixing by stirring.

For example, when calcium hydroxide and sulfur are used, the polysulfide can be produced through mixing slaked lime, sulfur, and water. At this time, the following reaction occurs:

Ca(OH)₂ → Ca⁺⁺ + 2OH⁻⁻

Ca⁺⁺ + S → CaS

CaS reacts through the following reaction:

2CaS + 4OH⁻⁻ → H₂S + Ca(OH)₂ + S + Ca + O₂

In a conventional production method, part of hydrogen sulfide and oxygen is exhausted to air as steam. In the present invention, it is designed to perform the reaction in an airtight container without exhausting steam.

Therefore, the above reaction accurately progresses, and the following reaction occurs:

H₂S + Ca(OH)₂ + S + Ca → Ca(HS)₂ + Ca(OH)₂

CaS reacts through the following reaction:

2CaS + 2H₂O → Ca(HS)₂+ Ca(OH)₂

Further, CaS reacts through the following reaction:

CaS + (x-1) S → CaSₓ

Accordingly, CaSₓ (x = 6) is stably produced.

The above process is not limited to when calcium hydroxide is used. It is possible to stably produce a treating agent containing Sₓ (x = 6) when one or a mixture of potassium hydroxide, magnesium hydroxide, calcium hydroxide, and sodium hydroxide is used.

Especially, when one of or a mixture of potassium hydroxide, magnesium hydroxide, calcium hydroxide, and sodium hydroxide is mixed and reacted with sulfur, while stirring so as to pulverize and peel off potassium, magnesium, calcium, or sodium, which is adhered on sulfur particle surfaces, the treating agent mainly containing the polysulfide (Sₓ, where x = 6)) can be more stably produced.

Further, when the reaction is performed at a dissolving temperature of sulfur or higher temperature, the treating agent mainly containing the polysulfide (Sₓ, where x = 8) can be stably produced.

Further, when a specified amount of one or a mixture of potassium hydroxide, magnesium hydroxide, calcium hydroxide, and sodium hydroxide is consecutively mixed into a mixed solution of sulfur and hot water, the treating agent mainly containing the polysulfide (Sₓ, where x = 8 to 10) can be stably produced.

Further, when slaked lime is mixed into a mixed solution of sulfur, hot water, and one of or a mixture of potassium hydroxide, magnesium hydroxide, calcium hydroxide, and sodium hydroxide under a low temperature (-20°C to 0°C), the treating agent containing a solidifying agent in a milky state, which can harden untreated substances and mainly contains the polysulfide (Sₓ, where x = 6 to 12), can be stably produced.

Further, when calcium is mixed into a mixed solution of sulfur, hot water, and one of or a mixture of potassium hydroxide, magnesium hydroxide, calcium hydroxide, and sodium hydroxide under a low temperature (-30°C to -25°C), the treating agent mainly containing the polysulfide (Sₓ, where x = 8) can be stably produced.

Further, sulfur is pulverized into 100 µm or smaller size (preferably 50 µm or smaller) in advance. Then, one of or a mixture of potassium hydroxide, magnesium hydroxide, calcium hydroxide, and sodium hydroxide is mixed with sulfur in a powder state or silt state. Accordingly, the treating agent mainly containing the polysulfide (Sₓ, where x = 10 to 12) can be stably produced.

In the embodiment, the solidifying agent may be produced from alkaline ash, which is waste, as a raw material. For example, fly ash (which is produced from mixing and burning 50 % Musselburgh and 50% Drayton coals, and has alkalinity of pH 13.5) is used as the alkaline ash. The fly ash, sulfur, and water are mixed in a reaction vessel at a ratio of 20 parts by weight of the fly ash, 20 parts by weight of sulfur, and 100 parts by weight of water. In the process, 20 parts by weight of the fly ash is mixed with 100 parts by weight of water in the reaction vessel. After closing an upper lid of the reaction vessel, the mixture is stirred for about ten minutes with a mixer.

In the next step, a safety valve is set, and an exhaust pressure is set at about 10 kg/cm² as an upper reaction pressure limit. Then, a furnace cooling water discharging valve, a cooling valve, and a cooling water inlet valve are opened to flow water.

In the next step, in order to suppress evaporation during the reaction, a pilot pressure of about 2.5 kg/cm² is applied with an air compressor.

In the next step, a burner is turned on to increase a temperature of the reaction vessel as mixing, while checking a pressure meter and a thermometer. At this time, the pressure is maintained under 10 kg/cm². When the thermometer reaches 110°C, the mixture is reacted for about 30 minutes while mixing.

In the next step, the burner is turned off, and the reaction vessel is placed quietly until the pressure meter comes down. When the pressure becomes stable, a residual pressure is completely discharged through an exhaust valve, thereby making the pressure equal to an atmospheric pressure.

In the next step, the mixer is stopped and the exhaust valve is opened. Then, the deposits and liquid are discharged and collected.

In the next step, the collected substance is cooled to obtain a chemical solution and a precipitate through precipitation. Accordingly, 130 parts by weight of the chemical solution and 20 parts by weight of the precipitate are obtained.

The collected chemical solution, i.e., a yellowish green liquid, contains calcium polysulfide, and has a liquid density of 1.2 g/cc and pH of 10.

When the fly ash having pH of 13.5 from an incinerator is used as a raw material, a brown liquid, which contains calcium polysulfide and has a liquid density of 1.15 g/cc and pH of 11, is obtained.

The liquid and the aqueous solution of the precipitate obtained in the method described above can be used as the solidifying agent.

When surfaces of the fibrous treatment objects to be treated are coated with the solidifying agent described above or the solidifying agent soaks in the fibrous treatment objects to be treated, the solidifying agent penetrates inside the fibrous treatment objects and hardens the fibrous treatment objects. For example, when the solidifying agent is applied to a ceiling of a room in which asbestos are used, a concentration of the asbestos is reduced to 1.1 fibers/l from 132 fibers/l before the application.

Especially when the fibrous treatment objects to be treated, which are adhered to a surface of a metallic structure such as a column or a beam, are coated with an enough amount of the solidifying agent or an enough amount of the solidifying agent soaks in the fibrous treatment objects to be treated to reach the surface of inner metallic structure, the surface of the metal structure can be modified from metal oxide to metal sulfide, thereby obtaining anti-rusting effect to the metal structure.

In addition, after adding a surfactant to the solidifying agent, the solidifying agent may coat the fibrous treatment objects to be treated, or the solidifying agent may soak in the fibrous treatment objects to be treated. In this case, it is possible to effectively permeate the solidifying agent in the hardening process.

Further, after adding water to the solidifying agent to adjust a specific gravity thereof, the solidifying agent may coat the fibrous treatment objects to be treated, or the solidifying agent may soak in the fibrous treatment objects to be treated. In this case, it is possible to effectively permeate the solidifying agent and adjust strength of the solidifying agent. For example, in a case of the chemical solution containing calcium polysulfide, when asbestos are removed after hardening, the specific gravity of the solidifying agent may be controlled in a range of 1.05 g/cc to 1.1 g/cc in view of the permeability rather than the strength. In a case of a normal hardening process, the specific gravity of the solidifying agent may be controlled in a range of 1.1 g/cc to 1.2 g/cc. In a case of hardening asbestos that are significantly deteriorated, the specific gravity may be controlled in a range of 1.2 g/cc to 1.35 g/cc in view of the strength.

Further, the fibrous treatment objects to be treated may be coated with the aqueous solution of metal hydroxide or the aqueous solution containing fine particles of metal hydroxide or the aqueous solution of metal hydroxide or the aqueous solution containing fine particles of metal hydroxide may soak in the fibrous treatment objects to be treated, after adding the aqueous solution to the solidifying agent. Further, the aqueous solution of metal hydroxide or the aqueous solution containing fine particles of metal hydroxide and the solidifying agent are sprayed to the fibrous treatment objects to be treated simultaneously, so that the aqueous solution is added to the solidifying agent and the fibrous treatment objects to be treated may be coated with or soaked in the solidifying agent.

Further, after or while a sizing agent is added to the solidifying agent, the solidifying agent may coat the fibrous treatment objects to be treated, or the solidifying agent may soak in the fibrous treatment objects to be treated. In this case, it is possible to effectively adhere the solidifying agent.

Further, after the solidifying agent may coat the fibrous treatment objects to be treated, or the solidifying agent may soak in the fibrous treatment objects to be treated, sulfur may be crystallized through naturally or forcedly drying, thereby hardening the fibrous treatment objects to be treated.

In this case, sulfur crystals grow in a needle shape inside and on a surface of the fibrous treatment objects to be treated, thereby improving strength.

Even when linear gaps are formed in a film of the solidifying agent, which is formed on the surface of the fibrous treatment objects to be treated, the sulfur crystals in a needle shape grow from the gaps and close the gaps, thereby improving strength. Furthermore, paint or the like may be top-coated to crash the crystals in a needle shape, thereby completely sealing the gaps.

### INDUSTRIAL APPLICABILITY

In the solidifying agent for the fibrous treatment objects to be treated or the method of fixing treatment for the fibrous treatment objects to be treated according to the present invention, it is possible to coat or soak the fibrous treatment objects to be treated with or in the solidifying agent for a purpose of continuous use after hardening the fibrous treatment objects to be treated. Further, it is possible to use the solidifying agent for a purpose of peeling after hardening the fibrous treatment objects to be treated. In this case, it is possible to prevent the fibrous treatment objects to be treated from scattering during a process of peeling.

## Claims

1. A solidifying agent for fibrous treatment objects to be treated, comprising:
an aqueous sulfide solution, in which one or a mixture of Group 1 or Group 2 metals or other alkali metal substances is ionically bonded with sulfur.

2. A solidifying agent for fibrous treatment objects to be treated, comprising:
an aqueous solution of polysulfide of one or a mixture of Group 1 or Group 2 metals or other alkali metal substances.

3. The solidifying agent for fibrous treatment objects to be treated according to Claim 1 or 2, further comprising:
an aqueous solution of metal hydroxide or an aqueous solution containing fine particles of metal hydroxide.

4. A method of fixing treatment for fibrous treatment objects to be treated, comprising the step of:
coating the fibrous treatment objects to be treated with the solidifying agent according to Claim 1 or 2 or soaking the solidifying agent according to Claim 1 or 2 in the fibrous treatment objects to be treated, thereby hardening the fibrous treatment objects to be treated.

5. The method of fixing treatment for the fibrous treatment objects to be treated according to Claim 4, wherein said solidifying agent according to Claim 1 or 2 coats or soaks in the fibrous treatment objects to be treated after adding a surfactant to the solidifying agent according to Claim 1 or 2.

6. The method of fixing treatment for the fibrous treatment objects to be treated according to Claim 4 or 5, wherein said solidifying agent according to Claim 1 or 2 coats or soaks in the fibrous treatment objects to be treated after adding water to the solidifying agent to adjust a specific gravity thereof.

7. The method of fixing treatment for the fibrous treatment objects to be treated according to any one of Claims 4 to 6, said solidifying agent according to Claim 1 or 2 coats or soaks in the fibrous treatment objects to be treated after or while adding an aqueous solution of metal hydroxide or an aqueous solution containing fine particles of metal hydroxide to the solidifying agent according to Claim 1 or 2.

8. The method of fixing treatment for the fibrous treatment objects to be treated according to any one of Claims 4 to 7, wherein said solidifying agent according to Claim 1 or 2 coats or soaks in the fibrous treatment objects to be treated after or while adding a sizing agent to the solidifying agent according to Claim 1 or 2.

9. The method of fixing treatment for the fibrous treatment objects to be treated according to any one of Claims 4 to 8, wherein said sulfur is naturally or enforcedly dried to crystallize to harden the fibrous treatment objects to be treated after the solidifying agent according to Claim 1 or 2 coats or soaks in the fibrous treatment objects to be treated.

10. The method of fixing treatment for the fibrous treatment objects to be treated according to any one of Claims 4 to 9, wherein said solidifying agent according to Claim 1 or 2 coats or soaks in the fibrous treatment objects to be treated so that the solidifying agent reaches a surface of a metal structure to which the fibrous treatment objects to be treated adhere.
